# EUROPÄISCHE PATENTSCHRIFT

(11) **EP 2 674 288 B1**
(45) Veröffentlichungstag und Bekanntmachung des Hinweises auf die Patenterteilung: **06.05.2015**
(21) Anmeldenummer: 13169299.8
(22) Anmeldetag: 27.05.2013
(51) Int. Cl.: B29D 30/24, B29D 30/26

(54) **Verfahren zur Herstellung eines Fahrzeugreifens**
Method for making a vehicle tyre
Procédé de fabrication d'un pneu de véhicule

(30) Priorität: 14.06.2012 DE 102012105156
(43) Veröffentlichungstag der Anmeldung: 18.12.2013
(73) Patentinhaber: Continental Reifen Deutschland GmbH, 30165 Hannover (DE)
(72) Erfinder: Thomfohrde, Claudia, 38542 Leiferde (DE); Gerighausen, Martin, 30890 Barsinghausen (DE); Linne, Stefan, 30900 Wedemark (DE); Kneussel, Ewald, 30890 Barsinghausen (DE)
(74) Vertreter: Widjaja, Wira

(56) Entgegenhaltungen:
- EP-A2- 0 997 263
- WO-A1-2009/070019
- WO-A1-2012/156146
- WO-A1-2012/156147
- JP-A- H06 254 990
- US-A1- 2002 108 716

## Beschreibung

Die Erfindung betrifft ein Verfahren zur Herstellung eines Fahrzeugreifens.

Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht und die Einlagen als breite Materiallagen auf einer Reifenaufbautrommel angeordnet werden. Anschließend wird der Wulstkern auf die Einlage gesetzt und das Einlagenende um den Kern herumgeschlagen.

Bei der konventionellen Reifenherstellung wird bei einem Verfahrensschritt das Einlagenende von der Reifeninnenseite um den Wulstkern herumgeschlagen. Bei einem zweistufigen Verfahren zur Herstellung von Fahrzeugreifen wird die Reifenkarkasse auf einer separaten Karkasstrommel aufgebaut. Eine solche Karkasstrommel ist in der Regel relativ komplex aufgebaut.

Bei den herkömmlichen Reifenaufbauverfahren werden auf der Karkasstrommel beide Seitenwände aufgewickelt. Anschließend wird die Reifenkarkasse mit den bereits applizierten Seitenwänden zu der Bombiertrommel verfahren. Ein Nachteil bei diesem herkömmlichen Verfahren besteht darin, dass bestimmte Reifenkonstruktionen nicht realisierbar sind.

Die WO 2012/156146 A1 (Art. 54(3)-EPÜ-Dokument), WO 2012/156147 A1 (Art. 54(3)-EPÜ-Dokument), EP 0 997 263 A2, US 2002/108716A1, WO 2009/070019 A1 und JP H06 254990 A offenbaren bekannte Herstellungverfahren für Fahrzeugreifen.

Der Erfindung liegt die Aufgabe zugrunde, ein Verfahren bereitzustellen, mit dem bestimmte Reifenkonstruktionen auf einfache Weise hergestellt werden können. Insbesondere soll durch das Verfahren ermöglicht werden, dass bei einem bestimmten Herstellungsschritt eine freie Zugänglichkeit im Bereich des Reifenwulstes gewährleistet wird.

Gelöst wird die Aufgabe gemäß Anspruch 1.

Ein Vorteil der Erfindung ist insbesondere darin zu sehen, dass durch das Verfahren auf einfache Weise ein Fahrzeugreifen hergestellt werden kann.

Das Verfahren ermöglicht ebenfalls die Herstellung von speziellen Reifenkonstruktionen, die mit den herkömmlichen Reifenaufbauverfahren bisher nicht möglich waren. Zu diesen speziellen Reifenkonstruktionen zählen insbesondere Reifenkonstruktionen mit einer sogenannten C-Lage, bei der die Karkasseinlage in einer bestimmten Art und Weise um den Wulstkern herum geschlagen wird und im Bereich des Reifengürtels endet. Diese Art der Reifenkonstruktion wird durch die erfindungsgemäße Reihenfolge der Verfahrensschritte nach Patentanspruch 1 ermöglicht. Bedeutend ist dabei, dass die Seitenwand nicht auf der Karkasstrommel appliziert wird, sondern erst auf der Bombiertrommel. Ein weiterer Vorteil besteht darin, dass die Zykluszeit zur Herstellung des Fahrzeugreifens bzw. Reifenrohlings insgesamt optimiert wird.

Ein weiterer erheblicher Vorteil besteht darin, dass nach der Übergabe der Reifenkarkasse an die Bombiertrommel beide Reifenwülste auf der Bombiertrommel sowohl von innen als auch von außen frei zugänglich sind. Dadurch können auf der Bombiertrommel sowohl auf der Innenseite als auch auf der Außenseite der Reifenwülste weitere Applikationen durchgeführt werden, die zu einer Optimierung der Reifenkonstruktion beitragen.

Es ist vorgesehen, dass bei Schritt e) dass auf der Innenseite überstehende Seitenwand-Bauteil in radialer Richtung nach außen am Reifenwulst hochgeschlagen wird.

Dadurch wird die Seitenwand auf der Innenseite des Reifenwulstes fest mit dem Reifenwulst verbunden.

In einer weiteren vorteilhaften Weiterbildung der Erfindung ist vorgesehen, dass bei Schritt e) das Hochschlagen der auf der Innenseite überstehenden Seitenwand-Bauteil pneumatisch mit einem Blähbalg erfolgt.

Mit einem Blähbalg lässt sich der Hochschlagvorgang mit einer hohen Geschwindigkeit durchführen.

In einer weiteren vorteilhaften Weiterbildung der Erfindung ist vorgesehen, dass bei Schritt e) das Hochschlagen der auf der Innenseite überstehenden Seitenwand-Bauteil mechanisch mit Rollenhebeln erfolgt.

Mit Rollenhebeln lässt sich ein gleichmäßiger Anpressdruck realisieren.

In einer weiteren vorteilhaften Weiterbildung der Erfindung ist vorgesehen, dass bei Schritt e) mindestens ein weiteres Reifenbauteil am Reifenwulst angeordnet wird.

Mit entsprechenden Reifenbauteilen lässt sich die Haltbarkeit des Reifenwulstes positiv beeinflussen.

In einer weiteren vorteilhaften Weiterbildung der Erfindung ist vorgesehen, dass bei Schritt e) mindestens ein Reifenbauteil in Form eines Wulstverstärkers am Reifenwulst angeordnet wird.

Wulstverstärker verbessern die Reifenkonstruktion und haben einen positiven Einfluss auf die Haltbarkeit.

In einer weiteren vorteilhaften Weiterbildung der Erfindung ist vorgesehen, dass vor Schritt c) die Seitenwände auf einer separaten Seitenwandtrommel vorkonfektioniert werden.

Dadurch wird die Zykluszeit zur Herstellung des Reifenrohlings insgesamt verkürzt.

In einer weiteren vorteilhaften Weiterbildung der Erfindung ist vorgesehen, dass vor Schritt c) die vorkonfektionierten Seitenwände mit einer Seitenwandtransfer-Einheit koaxial im Bereich der Segmente für die Kernklemmung auf der Bombiertrommel angeordnet werden.

Dadurch wird eine präzise Übergabe der Seitenwände an die Bombiertrommel gewährleistet.

In einer weiteren vorteilhaften Weiterbildung der Erfindung ist vorgesehen, dass bei Schritt d) die Seitenwände über eine Dehnung in radialer Richtung mit der Reifenkarkasse verbunden werden.

Auf diese Weise erfolgt eine präzise Übergabe der Seitenwände an die Bombiertrommel im Bereich der Segmente für die Kernklemmung.

In einer weiteren vorteilhaften Weiterbildung der Erfindung ist vorgesehen, dass vor Schritt c) die Seitenwände als erstes Reifenaufbauteil auf der Bombiertrommel aufgewickelt werden.

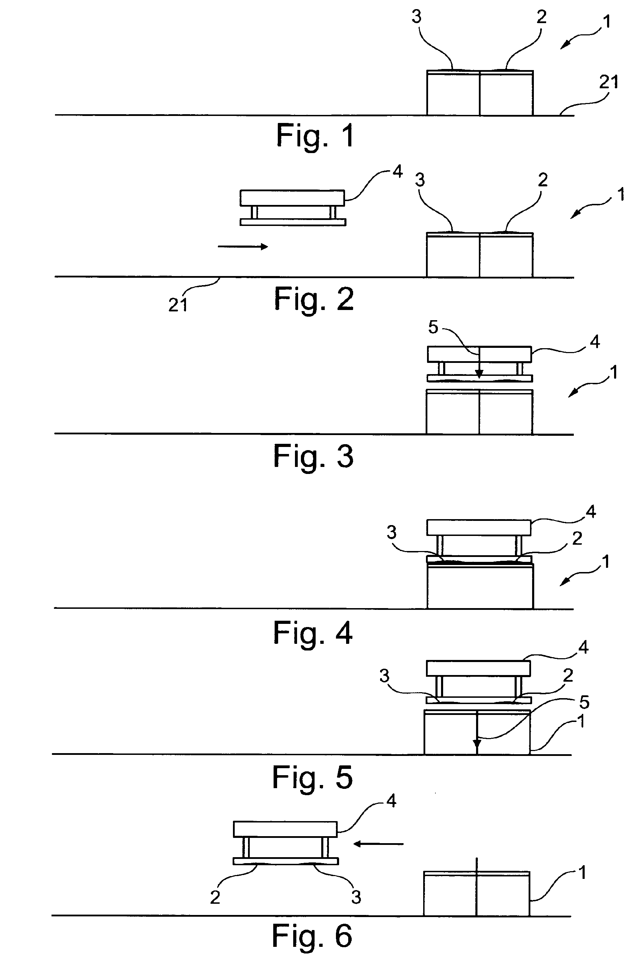

Diese Variante stellt eine Alternative zu der Variante dar, die in den Figuren 1 bis 8 dargestellt ist. Bei dieser Alternative werden die Seitenwände nicht auf einer separaten Seitenwandtrommel aufgewickelt, sondern direkt auf die Bombiertrommel im Bereich der Segmente für die Kernklemmung. Im Ergebnis würde man ebenfalls zwei aufgewickelte Seitenwände haben, die bereits auf einer Bombiertrommel appliziert sind. Der Vorteil bei dieser Variante besteht darin, dass keine separate Seitenwandtrommel erforderlich ist.

In einer weiteren vorteilhaften Weiterbildung der Erfindung ist vorgesehen, dass bei Schritt a) die Reifenkarkasse auf der Karkasstrommel mit einem Kern und einem Lagenumschlag vorkonfektioniert wird.

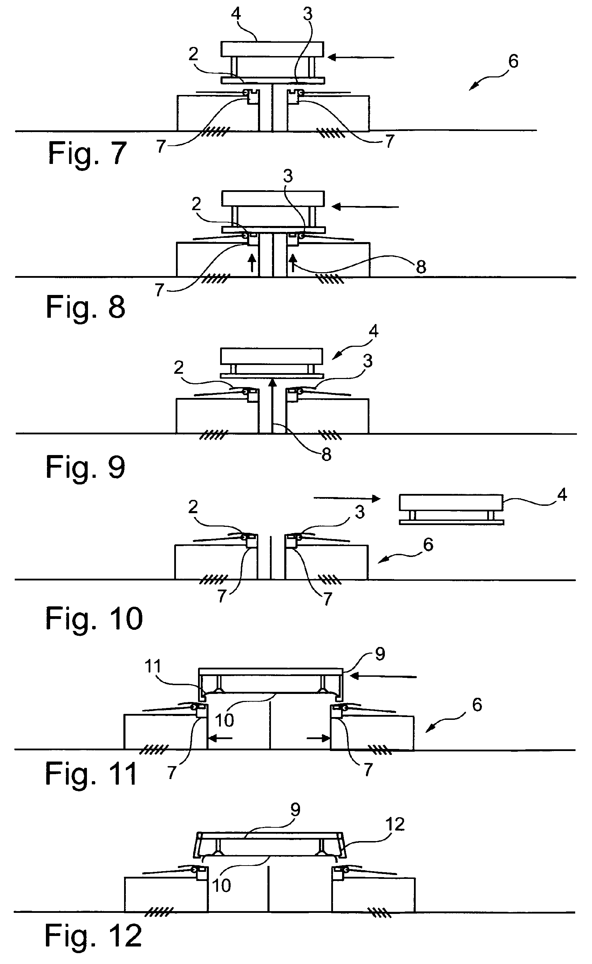

Auf diese Weise wird die Zykluszeit insgesamt reduziert. Die Reifenkarkasse mit Kernen und einem Lagenumschlag sind insbesondere in der Figur 11 dargestellt.

In einer weiteren vorteilhaften Weiterbildung der Erfindung ist vorgesehen, dass bei Schritt a) die Reifenkarkasse auf der Karkasstrommel in Form eines flachen Schlauches ohne einen Lagenumschlag vorkonfektioniert wird.

Bei dieser Variante erfolgt auf der Karkasstrommel kein Lagenumschlag. Die Reifenkarkasse wird in Form eines flachen Schlauches zu der Bombiertrommel transferiert. Der Lagenumschlag der Karkasseinlage erfolgt bei dieser Variante zusammen mit dem Hochschlagen der Seitenwände.

In einer weiteren vorteilhaften Weiterbildung der Erfindung ist vorgesehen, dass bei Schritt f) die Seitenwand vor dem Transfer des Gürtel-Laufstreifen-Paketes über die Bombiertrommel hochgeschlagen wird.

Dadurch ist eine bestimmte Reifenkonstruktion realisierbar, bei der die Seitenwand unter dem Gürtel-Laufstreifen-Paket angeordnet werden kann.

In einer weiteren vorteilhaften Weiterbildung der Erfindung ist vorgesehen, dass bei Schritt f) die Seitenwand nach dem Transfer des Gürtel-Laufstreifen-Paketes über die Bombiertrommel hochgeschlagen wird, wobei ein Teil der Seitenwand über dem Laufstreifen angeordnet werden kann.

Dadurch ist es möglich, den oberen Teil der Seitenwand über dem Gürtel-Laufstreifen-Paket anzuordnen.

In einer weiteren vorteilhaften Weiterbildung der Erfindung ist vorgesehen, dass auf der separaten Seitenwandtrommel außer der Seitenwand weitere Reifenaufbauteile appliziert werden.

Als weitere Reifenaufbauteile kommen z. B. Wulstverstärker in Form von gummierten Textil- oder Stohrstahlkordlagen in Frage. Das Auflegen dieser weiteren Reifenaufbauteile auf der Seitenwandtrommel reduziert insgesamt die Zykluszeit.

In einer weiteren vorteilhaften Weiterbildung der Erfindung ist vorgesehen, dass die Hochschlagmittel an der Bombiertrommel in Form einer Vielzahl von Rollenhebeln ausgebildet sind.

Auf diese Weise werden die Seitenwände mit einer hohen Präzision und Schnelligkeit an der Reifenkarkasse hochgeschlagen.

Anhand mehrerer Ausführungsbeispiele soll die Erfindung näher erläutert werden. Es zeigen:
- Fig. 1 - 19:: ein Ausführungsbeispiel des erfindungsgemäßen Verfahrens.
- Fig. 20 - 23:: die Schritte zur Herstellung der Reifenkarkasse
- Fig. 24 - 25:: den Verfahrens-Schritt nach der Übergabe der Reifenkarkass an die Bombiertrommel
- Fig. 26 - 27:: eine Variante des Hochschlagen der Seitenwände
- Fig. 28 - 29:: eine weiter Variante des Hochschlagen der Seitenwände

Die Figur 1 zeigt die separate Seitenwandtrommel 1 in einer Radial-Schnitt-Ansicht, wobei nur die obere Hälfte der Seitenwandtrommel 1 dargestellt ist. Die Linie 21 stellt die axiale Symmetrielinie der Seitenwandtrommel 1 dar, zu der diese Trommel rotationssymmetrisch aufgebaut ist. Auf der Seitenwandtrommel 1 werden die linke Seitenwand 3 und die rechte Seitenwand 2 in Form von zwei separaten Ringen aufgewickelt.

Die Figur 2 zeigt den Verfahrensschritt, bei dem die Seitenwandtransfer-Einheit über die Seitenwandtrommel 1 verfahren wird. Die Seitenwandtransfer-Einheit 4 ist ebenfalls rotationssymmetrisch zur Symmetrielinie 21 aufgebaut.

Die Figur 3 zeigt den Verfahrensschritt, bei dem die Seitenwandtransfer-Einheit koaxial zur Seitenwandtrommel 1 angeordnet ist. Beim nächsten Verfahrensschritt fällt die Seitenwandtransfer-Einheit 4 in radialer Richtung 5 ein.

Die Figur 4 zeigt den Verfahrensschritt, bei dem die Seitenwandtransfer-Einheit 4 die Seitenwände 2 und 3 in radialer Richtung eingeklemmt hat.

Die Figur 5 zeigt den Verfahrensschritt, bei dem die Seitenwandtrommel 1 in radialer Richtung 5 einfällt. Die Seitenwände 2 und 3 werden nunmehr durch die Seitenwandtransfer-Einheit 4 gehalten.

Die Figur 6 zeigt den Verfahrensschritt, bei dem die Seitenwände 2 und 3 mit der Seitenwandtransfer-Einheit 4 von der Seitenwandtrommel 1 weg verfahren werden.

Die Figur 7 zeigt den Verfahrensschritt, bei dem die Seitenwandtransfer-Einheit 4 koaxial über die Bombiertrommel 6 verfahren wird. Die Seitenwände 2 und 3 werden exakt über den Segmenten 7 für die Kernklemmung positioniert.

Die Figur 8 zeigt den Verfahrensschritt, bei dem die Segmente 7 für die Kernklemmung in radialer Richtung expandieren und dadurch die Seitenwände 2 und 3 entsprechend einklemmen.

Die Figur 9 zeigt den Verfahrensschritt, bei dem die Seitenwandtransfer-Einheit in radialer Richtung 8 expandiert und dadurch die beiden Seitenwände 2 und 3 freigibt.

Die Figur 10 zeigt den Verfahrensschritt, bei dem die Seitenwandtransfer-Einheit von der Bombiertrommel 6 weggefahren wird.

Die Figur 11 zeigt den Verfahrensschritt, bei dem die Reifenkarkasse 10 mit dem Lagenumschlag 11 koaxial zur Bombiertrommel 6 angeordnet worden ist. Die Reifenkarkasse 10 wurde vorab auf einer separaten Karkasstrommel vorkonfektioniert, wobei ebenfalls der Lagenumschlag 11 auf der nicht dargestellten Karkasstrommel erfolgt ist. Anschließend wurde die Reifenkarkasse 10 mit der Karkasstransfer-Einheit 9 von der Karkasstrommel abgenommen und koaxial über der Bombiertrommel 6 positioniert. Die Segmente 7 wurden vorab in axialer Richtung auseinandergefahren, so dass die beiden Enden der Reifenkarkasse 10 direkt über den Segmenten 7 positioniert sind.

Die Figur 12 zeigt den Verfahrensschritt, bei dem die Haltemittel 12 der Karkasstransfer-Einheit 9 seitlich weggeklappt sind. Dadurch werden die beiden Enden der Reifenkarkasse entsprechend freigegeben.

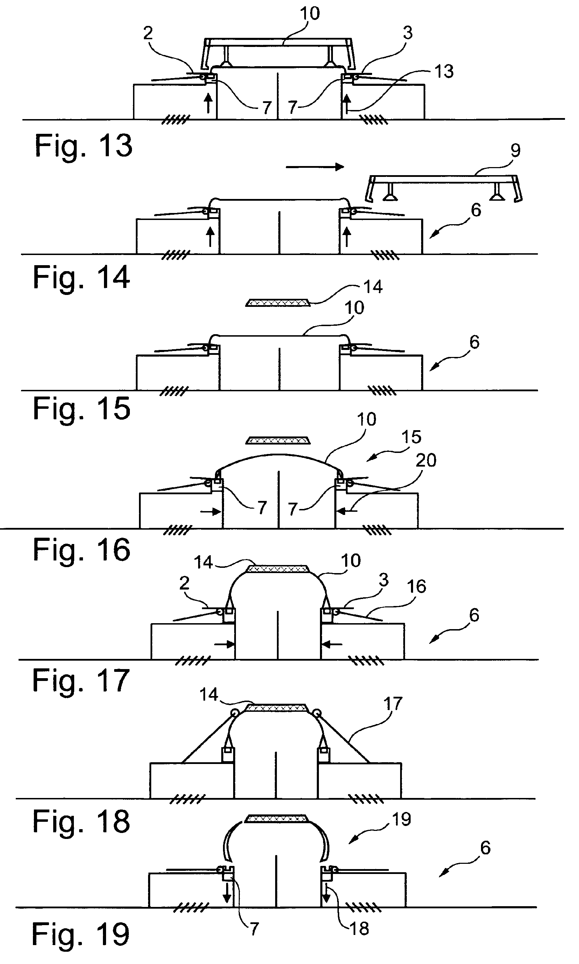

Die Figur 13 zeigt den Verfahrensschritt, bei dem die Segmente 7 in radialer Richtung 13 expandieren. Dadurch werden die auf den Segmenten 7 aufliegenden Seitenwände 2 und 3 radial expandiert und gegen die beiden Enden der Reifenkarkasse 10 gedrückt und mit diesen verbunden.

Die Figur 14 zeigt den Verfahrensschritt, bei dem die Karkasstransfer-Einheit 9 von der Bombiertrommel 6 wegverfahren wird.

Die Figur 15 zeigt den Verfahrensschritt, bei dem das Gürtel-Laufstreifen-Paket 14 koaxial zur Bombiertrommel 6 positioniert wird.

Die Figur 16 zeigt den Verfahrensschritt, bei dem der Bombiervorgang eingeleitet wird. Die beiden Segmente 7 fahren beim Bombiervorgang in axialer Richtung 20 aufeinander zu, wobei die Reifenkarkasse 10 entsprechend nach radial außen gewölbt wird.

Die Figur 17 zeigt die Vereinigung der Reifenkarkasse 10 mit dem koaxial angeordneten Gürtel-Laufstreifen-Paket 14. Bei diesem Verfahrensschritt befinden sich die Rollenhebel 16 der Bombiertrommel 6 noch in einer Warteposition.

Die Figur 18 zeigt den Verfahrensschritt, bei dem die Seitenwände bereits an der Reifenkarkasse entsprechend hochgeschlagen wurden. Dieses Hochschlagen der Seitenwände erfolgt mit den Rollenhebeln 17, die auseinanderspreizen und dabei die aufliegenden Seitenwände 2 und 3 an der Reifenkarkasse hochschlagen. Da das Gürtel-Laufstreifen-Paket 14 bereits mit der Reifenkarkasse 10 vereinigt wurden ist, kann der obere Teil der Seitenwände über das Gürtel-Laufstreifen-Paket 14 angeordnet werden.

Die Figur 19 zeigt den Verfahrensschritt, bei dem die Segmente 7 in radialer Richtung 18 einfahren. Der fertiggestellte Reifenrohling 19 wird bei diesem Schritt freigegeben und kann anschließend von der Bombiertrommel 6 entnommen werden. Die Fertigstellung des Fahrzeugreifens erfolgt anschließend mit einem herkömmlichen Verfahren. Bei einer nicht dargestellten Variante wird die Seitenwand vor dem Transfer des Gürtelstreifenpaketes über die Bombiertrommel hochgeschlagen. Dadurch ist es möglich, die oberen Teile der Seitenwand unterhalb des Gürtel-Laufstreifen-Paketes anzuordnen.

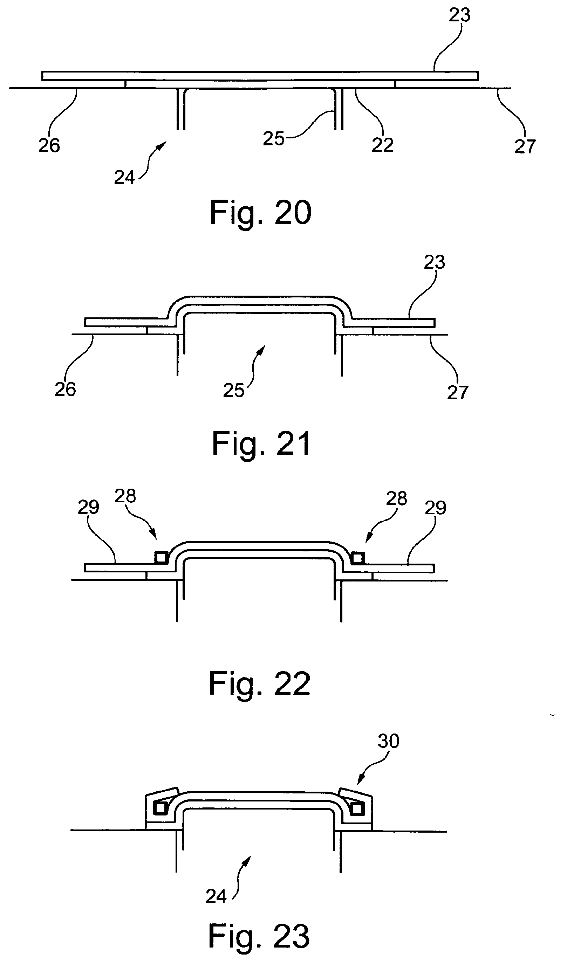

Die Figuren 20 bis 23 zeigen die einzelnen Schritte zur Herstellung der Reifenkarkasse auf der Karkasstrommel 24.

Fig. 20 zeigt zunächst den Schritt, bei dem die Innenseele 22 und nachfolgend eine Karkasslage 23 auf die Karkasstrommel 24 aufgewickelt wurde. In der Mitte befindet sich der expandierbare Mittelteil 25 der Karkasstrommel 24. Seitlich von dem Mittelteil 25 sind ein linkes Außenteil 26 und ein rechtes Außenteil 27 der Karkasstrommel angeordnet.

Die Fig. 21 zeigt den Schritt, bei dem das Mittelteil 25 nach außen expandiert, wobei an der anliegenden Karkasslage 23 eine entsprechende Schulter gebildet wird.

Die Fig. 22 zeigt den Schritt, bei dem von links und von rechts jeweils ein Reifenkern 28 gegen die gebildete Schulter der Karkasseinlage gesetzt wird.

Die Fig. 23 zeigt die Reifenkarkasse 30 mit einem entsprechenden Lagenumschlag. Die überstehenden Karkass-Lagenenden 29 in der Fig. 22 wurden mit einer Umschlagbewegung um die Reifenkerne 28 an der Schulter der Karkasslage hochgeschlagen. Nachfolgend wird die Reifenkarkasse 30 mit dem Lagenumschlag von der Karkasstrommel 24 abgenommen und zur Bombiertrommel verfahren. Die nachfolgenden Verfahrensschritte zeigen die Fig. 11 ff.

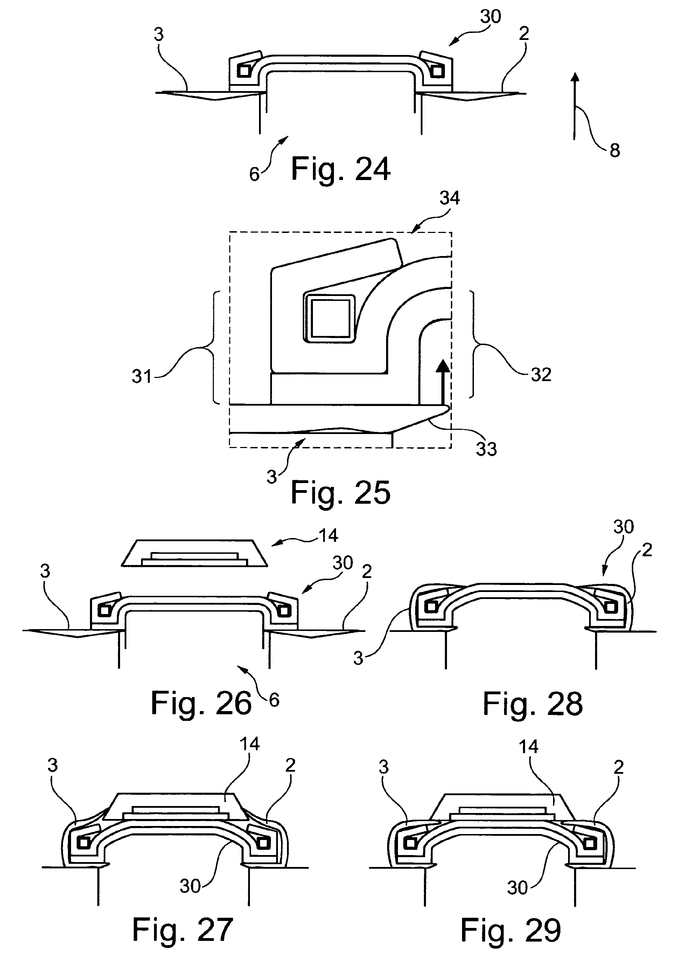

Die Fig. 24 zeigt den Verfahrensschritt, bei dem die Reifenkarkasse 30 mit dem Lagenumschlag auf der Bombiertrommel 6 abgelegt worden ist. Der Vorgang der Übergabe der Reifenkarkasse an die Bombiertrommel 6 ist insbesondere in den Fig. 13 und 14 dargestellt.

Die Fig. 25 zeigt einen Teilausschnitt mit dem linken Reifenwulst in der Fig. 24. Die Fig. zeigt den linken Reifenkern 34 am linken Reifenwulst mit der linken Seitenwand 3. Auf der Innenseite des Reifenwulstes ist ein überstehendes Reifenbauteil 33 dargestellt. Entscheidend ist, dass der Reifenwulst auf beiden Seiten frei zugänglich ist für die Durchführung von weiteren nachfolgenden Applikationen am Reifenwulst. Die freie Zugänglichkeit gilt sowohl für den seitlichen Bereich 31 auf der Außenseite des linken Reifenwulstes als auch für den seitlichen Bereich 32 auf der Innenseite des linken Reifenwulstes. Eine nachfolgende Applikation wäre beispielsweise das Hochschlagen des auf der Innenseite überstehenden Seitenwand-Bauteiles 33 an den Reifenwulst. Dieser Hochschlagvorgang kann sowohl pneumatisch als auch mechanisch mit Rollenhebeln erfolgen. Weitere vorteilhafte Applikationen umfassen das Auflegen von weiteren Reifenbauteilen, beispielsweise in Form von Wulstverstärkern. Das Auflegen von Wulstverstärkern ist sowohl im Bereich 31 als auch im Bereich 32 möglich, da diese Bereiche frei zugänglich sind.

Die Fig. 26 zeigt den Verfahrensschritt, bei dem das Gürtel-Laufstreifen-Paket 14 über die Reifenkarkasse 30 verfahren wurde. Anschließend erfolgt die Vorbereitung des Hochschlagens der Seitenwände 2 und 3 auf der Bombiertrommel 6.

Die Fig. 27 zeigt den Verfahrensschritt, bei dem die Seitenwände 2 und 3 an der Reifenkarkasse 30 hochgeschlagen wurde, wobei die Seitenwände 2 und 3 im oberen Bereich über dem Gürtel-Laufstreifen-Paket in der dargestellten Weise anliegen.

Die Fig. 28 zeigt einen alternativen Reifenaufbau. Bei diesem alternativen Verfahren werden zunächst die beiden Seitenwände 2 und 3 an der Reifenkarkasse 30 hochgeschlagen, beispielsweise mit Rollenhebeln oder Blähbälgen. Erst nach diesem Schritt wird das Gürtel-Laufstreifen-Paket über die Reifenkarkasse 30 verfahren.

Die Fig. 29 zeigt den Verfahrensschritt, bei dem das Gürtel-Laufstreifen-Paket 14 über der Reifenkarkasse 30 angeordnet worden ist. Anschließend erfolgt der Bombiervorgang, bei dem die Reifenkarkasse 30 in das Laufstreifen-Paket 14 bombiert wird. Die beiden oberen Bereiche 2 und 3 werden auf diese Weise unterhalb des Gürtel-Laufstreifen-Paketes 14 angeordnet. Nach dem Bombiervorgang des Reifenrohlings wird dieser von der Bombiertrommel abgenommen und nach einem konventionellen Herstellungsverfahren weiterverarbeitet.

### Bezugszeichenliste

### (ist Teil der Beschreibung)

- 1: Seitenwandtrommel
- 2: Rechte Seitenwand
- 3: Linke Seitenwand
- 4: Seitenwandtransfer-Einheit
- 5: radiale Richtung
- 6: Bombiertrommel
- 7: Segmente für Kernklemmung
- 8: radiale Richtung
- 9: Karkasstransfer-Einheit
- 10: Reifenkarkasse mit Lagenumschlag
- 11: Lagenumschlag mit Kern
- 12: Haltemittel für Karkasstransfer-Einheit
- 13: radiales Expandieren der Segmente
- 14: Gürtel-Lauf streifen-Paket
- 15: Bombiervorgang
- 16: Rollenhebel
- 17: Rollenhebel beim Hochschlagen der Seitenwände
- 18: radiales Einfahren der Segmente
- 19: fertig gestellter Reifenrohling
- 20: axiales Zusammenfahren der Segmente beim Bombiervorgang
- 21: axiale Symmetrielinie
- 22: Innenseele
- 23: Karkasslage
- 24: Karkasstrommel
- 25: expandierbarer Mittelteil der Karkasstrommel
- 26: linkes Außenteil der Karkasstrommel
- 27: rechtes Außenteil der Karkasstrommel
- 28: Reifenkern
- 29: überstehende Karkass-Lagenenden
- 30: Reifenkarkasse mit Lagenumschlag
- 31: frei zugänglicher seitlicher Bereich auf der Außenseite des linken Reifenwulstes
- 32: frei zugänglicher seitlicher Bereich auf der Innenseite des linken Reifenwulstes
- 33: auf der Innenseite überstehendes Seitenwand-Bauteil
- 34: linker Reifenkern am linken Reifenwulst

## Patentansprüche

1. Verfahren zur Herstellung eines Fahrzeugreifens mit einer Reifenkarkasse (10), Reifenwülsten mit Kernen, einem Reifengürtel und einem Laufstreifen mit folgenden Schritten:
a) Fertigstellen einer Reifenkarkasse (10) auf einer Karkasstrommel,
wobei auf der Karkasstrommel keine Reifenaufbauteile in Form von Seitenwänden (2, 3) aufgelegt werden,
b) Abnahme der Reifenkarkasse (10) von der Karkasstrommel mit einer Karkasstranfereinheit,
c) Verfahren der Karkasstranfereinheit (9) mit der Reifenkarkasse (10) über eine Bombiertrommel (6),
wobei bei diesem Schritt die Reifenaufbauteile in Form von Seitenwänden (2, 3) bereits auf der Bombiertrommel (6) angeordnet sind,
d) Durchführung einer Kernklemmung mit Segmenten (7) der Bombiertrommel (6), wobei über diese Kernklemmung die auf der Bombiertrommel (6) anliegenden Seitenwände (2, 3) mit der koaxial positionierten Reifenkarkasse (10) im Bereich des Reifenwulstes mit der Reifenkarkasse (10) verbunden wird,
wobei die seitlichen Bereiche (31, 32) auf der Außenseite und der Innenseite der Reifenwülste frei zugänglich sind für die Durchführung von nachfolgenden Applikationen am Reifenwulst,
e) Durchführen von mindestens einer weiteren Applikation am Reifenwulst,
wobei dass auf der Innenseite überstehende Seitenwand-Bauteil (33) in radialer Richtung (8) nach außen am Reifenwulst hochgeschlagen wird,
f) Bombieren der Reifenkarkasse (10) mit den auf beiden Seiten angebundenen Seitenwänden (2, 3),
wobei die Seitenwände (2, 3) mit einem Hochschlagmittel (16) seitlich an der Reifenkarkasse (10) hochgeschlagen werden und die Reifenkarasse (10) mit dem koaxial angeordneten Gürtel-Laufstreifen-Paket (14) vereinigt wird,
g) Fertigstellen des Reifenrohlings (19) mit weiteren Schritten.

2. Verfahren nach Anspruch 1,
**dadurch gekennzeichnet, dass**
bei Schritt e) das Hochschlagen der auf der Innenseite überstehenden Seitenwand-Bauteil (33) pneumatisch mit einem Blähbalg erfolgt.

3. Verfahren nach einem der vorhergehenden Ansprüche,
**dadurch gekennzeichnet, dass**
bei Schritt e) das Hochschlagen der auf der Innenseite überstehenden Seitenwand-Bauteil (33) mechanisch mit Rollenhebeln erfolgt.

4. Verfahren nach einem der vorhergehenden Ansprüche,
**dadurch gekennzeichnet, dass**
bei Schritt e) mindestens ein weiteres Reifenbauteil am Reifenwulst angeordnet wird.

5. Verfahren nach einem der vorhergehenden Ansprüche,
**dadurch gekennzeichnet, dass**
bei Schritt e) mindestens ein Reifenbauteil in Form eines Wulstverstärkers am Reifenwulst angeordnet wird.

6. Verfahren nach einem der vorhergehenden Ansprüche,
**dadurch gekennzeichnet, dass**
vor Schritt c) die Seitenwände (2, 3) auf einer separaten Seitenwandtrommel (1) vorkonfektioniert werden.

7. Verfahren nach einem der vorhergehenden Ansprüche,
**dadurch gekennzeichnet, dass**
vor Schritt c) die vorkonfektionierten Seitenwände (2, 3) mit einer Seitenwandtransfer-Einheit (4) koaxial im Bereich der Segemente (7) für die Kernklemmung auf der Bombiertrommel (6) angeordnet werden.

8. Verfahren nach einem der vorhergehenden Ansprüche,
**dadurch gekennzeichnet, dass**
bei Schritt d) die Seitenwände (2, 3) über eine Dehnung in radialer Richtung (8) mit der Reifenkarkasse (10) verbunden werden.

9. Verfahren nach einem der vorhergehenden Ansprüche,
**dadurch gekennzeichnet, dass**
vor Schritt c) die Seitenwände (2, 3) als erstes Reifenaufbauteil auf der Bombiertrommel (6) aufgewickelt werden.

10. Verfahren nach einem der vorhergehenden Ansprüche,
**dadurch gekennzeichnet, dass**
bei Schritt a) die Reifenkarkasse (10) auf der Karkasstrommel mit einem Kern und einem Lagenumschlag (11) vorkonfektioniert wird.

11. Verfahren nach einem der vorhergehenden Ansprüche,
**dadurch gekennzeichnet, dass**
bei Schritt f) die Seitenwand (2, 3) vor dem Transfer des Gürtel-Laufstreifen-Paketes (14) über die Bombiertrommel (6) hochgeschlagen wird.

12. Verfahren nach einem der vorhergehenden Ansprüche,
**dadurch gekennzeichnet, dass**
bei Schritt f) die Seitenwand (2, 3) nach dem Transfer des Gürtel-Laufstreifen-Paketes (14) über die Bombiertrommel (6) hochgeschlagen wird, wobei ein Teil der Seitenwand über dem Laufstreifen angeordnet werden kann.

## Claims

1. Method for making a vehicle tyre comprising a tyre carcass (10), tyre beads with cores, a tyre breaker belt and a tread rubber, with the following steps:
a) producing a tyre carcass (10) on a carcass drum, no tyre-building parts in the form of sidewalls (2, 3) being placed on the carcass drum,
b) removing the tyre carcass (10) from the carcass drum by a carcass transfer unit,
c) moving the carcass transfer unit (9) with the tyre carcass (10) over a shaping drum (6),
in this step, the tyre-building parts in the form of sidewalls (2, 3) already being arranged on the shaping drum (6),
d) carrying out core clamping with segments (7) of the shaping drum (6), this core clamping having the effect that the sidewalls (2, 3) lying in place on the shaping drum (6) are connected to the tyre carcass (10), with the tyre carcass (10) coaxially positioned, in the region of the tyre bead,
the lateral regions (31, 32) on the outer side and the inner side of the tyre beads being freely accessible for the carrying out of subsequent applications on the tyre bead,
e) carrying out at least one further application on the tyre bead, the sidewall component (33) that is projecting on the inner side being turned up outwardly in the radial direction (8) on the tyre bead,
f) shaping the tyre carcass (10) with the sidewalls (2, 3) attached on both sides,
the sidewalls (2, 3) being turned up by a turning-up means (16) to the sides of the tyre carcass (10) and the tyre carcass (10) being brought together as one with the coaxially arranged belt-tread assembly (14),
g) completing the tyre blank (19) by further steps.

2. Method according to Claim 1,
**characterized in that**
in step e), the turning up of the sidewall component (33) that projects on the inner side is performed pneumatically with an inflatable bladder.

3. Method according to one of the preceding claims,
**characterized in that**
in step e), the turning up of the sidewall component (33) that projects on the inner side is performed mechanically with roller levers.

4. Method according to one of the preceding claims,
**characterized in that**
in step e), at least one further tyre component is arranged on the tyre bead.

5. Method according to one of the preceding claims,
**characterized in that**
in step e), at least one tyre component in the form of a bead reinforcer is arranged on the tyre bead.

6. Method according to one of the preceding claims,
**characterized in that**
before step c), the sidewalls (2, 3) are prefabricated on a separate sidewall drum (1).

7. Method according to one of the preceding claims,
**characterized in that**
before step c), the prefabricated sidewalls (2, 3) are arranged by a sidewall transfer unit (4) coaxially in the region of the segments (7) for the core clamping on the shaping drum (6).

8. Method according to one of the preceding claims,
**characterized in that**
in step d), the sidewalls (2, 3) are connected to the tyre carcass (10) by means of stretching in the radial direction (8).

9. Method according to one of the preceding claims,
**characterized in that**
before step c), the sidewalls (2, 3) are wound up on the shaping drum (6) as a first tyre-building part.

10. Method according to one of the preceding claims,
**characterized in that**
in step a), the tyre carcass (10) is prefabricated on the carcass drum with a core and a ply turnup (11).

11. Method according to one of the preceding claims,
**characterized in that**
in step f), the sidewall (2, 3) is turned up before the transfer of the belt-tread assembly (14) over the shaping drum (6).

12. Method according to one of the preceding claims,
**characterized in that**
in step f), the sidewall (2, 3) is turned up after the transfer of the belt-tread assembly (14) over the shaping drum (6), it being possible for part of the sidewall to be arranged over the tread rubber.

## Revendications

1. Procédé de fabrication d'un pneu de véhicule avec une carcasse de pneu (10), des talons de pneu avec des tringles, une ceinture de pneu et une bande de roulement, comprenant les étapes suivantes :
a) fabrication d'une carcasse de pneu (10) sur un tambour de carcasse, aucune pièce de construction de pneu en forme de parois latérales (2, 3) n'étant appliquée sur le tambour de carcasse,
b) enlèvement de la carcasse de pneu (10) du tambour de carcasse avec une unité de transfert de carcasse,
c) déplacement de l'unité de transfert de carcasse (9) avec la carcasse de pneu (10) sur un tambour de bombement (6),
les pièces de construction de pneu en forme de parois latérales (2, 3) étant, dans cette étape, déjà disposées sur le tambour de bombement (6),
d) mise en oeuvre d'un serrage des tringles avec des segments (7) du tambour de bombement (6), les parois latérales (2, 3) s'appliquant sur le tambour de bombement (6) étant connectées à la carcasse de pneu (10) par le biais de ce serrage des tringles avec la carcasse de pneu (10) positionnée coaxialement dans la région du talon de pneu,
les régions latérales (31, 32) sur le côté extérieur et le côté intérieur des talons de pneu étant accessibles librement pour mettre en oeuvre des applications subséquentes sur le talon de pneu,
e) mise en oeuvre d'au moins une application supplémentaire sur le talon de pneu, le composant de paroi latérale (33) saillant sur le côté intérieur étant relevé dans la direction radiale (8) vers l'extérieur sur le talon de pneu,
f) bombement de la carcasse de pneu (10) avec les parois latérales (2, 3) raccordées sur les deux côtés,
les parois latérales (2, 3) étant relevées avec un moyen de relèvement (16) latéralement au niveau de la carcasse de pneu (10) et la carcasse de pneu (10) étant raccordée au paquet, disposé coaxialement, constitué par la ceinture et la bande de roulement (14),
g) fabrication du pneu vert (19) avec des étapes supplémentaires.

2. Procédé selon la revendication 1,
**caractérisé en ce que**
dans l'étape e), le relèvement du composant de paroi latérale (33) saillant sur le côté intérieur s'effectue de manière pneumatique avec un soufflet de soufflage.

3. Procédé selon l'une quelconque des revendications précédentes,
**caractérisé en ce que**
dans l'étape e), le relèvement du composant de paroi latérale (33) saillant sur le côté intérieur s'effectue mécaniquement avec des leviers à galet.

4. Procédé selon l'une quelconque des revendications précédentes,
**caractérisé en ce que**
dans l'étape e), au moins un composant de pneu supplémentaire est disposé sur le talon de pneu.

5. Procédé selon l'une quelconque des revendications précédentes,
**caractérisé en ce que**
dans l'étape e), au moins un composant de pneu sous forme de renfort de talon est disposé sur le talon de pneu.

6. Procédé selon l'une quelconque des revendications précédentes,
**caractérisé en ce que**
avant l'étape c), les parois latérales (2, 3) sont préconfectionnées sur un tambour de paroi latérale séparé (1).

7. Procédé selon l'une quelconque des revendications précédentes,
**caractérisé en ce que**
avant l'étape c), les parois latérales préconfectionnées (2, 3) sont disposées sur le tambour de bombement (6) avec une unité de transfert de paroi latérale (4) coaxialement dans la région des segments (7) pour le serrage des tringles.

8. Procédé selon l'une quelconque des revendications précédentes,
**caractérisé en ce que**
dans l'étape d), les parois latérales (2, 3) sont connectées à la carcasse de pneu (10) par le biais d'un étirement dans la direction radiale (8).

9. Procédé selon l'une quelconque des revendications précédentes,
**caractérisé en ce que**
avant l'étape c), les parois latérales (2, 3) sont enroulées en tant que première pièce de construction de pneu sur le tambour de bombement (6).

10. Procédé selon l'une quelconque des revendications précédentes,
**caractérisé en ce que**
dans l'étape a), la carcasse de pneu (10) est préconfectionnée sur le tambour de carcasse avec une tringle et un retournement de pli (11).

11. Procédé selon l'une quelconque des revendications précédentes,
**caractérisé en ce que**
dans l'étape f), la paroi latérale (2, 3) est relevée avant le transfert du paquet constitué par la ceinture et la bande de roulement (14) sur le tambour de bombement (6).

12. Procédé selon l'une quelconque des revendications précédentes,
**caractérisé en ce que**
dans l'étape f), la paroi latérale (2, 3) est relevée après le transfert du paquet constitué par la ceinture et la bande de roulement (14) sur le tambour de bombement (6), une partie de la paroi latérale pouvant être disposée par-dessus la bande de roulement.
